# FASCICULE DE BREVET EUROPEEN

(11) **EP 1 748 232 B1**
(45) Date de publication et mention de la délivrance du brevet: **31.03.2010**
(21) Numéro de dépôt: 06014505.9
(22) Date de dépôt: 12.07.2006
(51) Int. Cl.: F16J 15/02, H01T 13/08

(54) **Joint pour puits de bougie**
Dichtung für eine Zündkerzenöffnung
Seal for a sparkplug well

(30) Priorité: 29.07.2005 FR 0552388
(43) Date de publication de la demande: 31.01.2007
(73) Titulaire: Carl Freudenberg KG, 69469 Weinheim (DE)
(72) Inventeur: Chaume, Isabelle, 87000 Limoges (FR); Jeanne, Olivier, 87200 St Junien (FR); Raillard, Daniel, 87140 Chamborêt (FR)

(56) Documents cités:
- DE-B- 1 007 131
- FR-A- 2 350 526
- FR-A- 2 476 538
- JP-A- 8 121 247
- US-A1- 2002 130 472

## Description

La présente invention se rapporte à un joint plus particulièrement adapté pour assurer l'étanchéité autour d'un puits de bougie.

Pour initier la combustion dans un moteur, des bougies sont placées en partie supérieure des chambres de combustion. Pour permettre leur changement sans avoir à démonter le moteur, les bougies sont placées dans un logement appelé par la suite puits de bougie qui s'étend depuis la chambre de combustion jusqu'à l'extérieur du moteur, traversant la protection disposée au-dessus de la culasse du moteur appelée par la suite couvre-culasse.

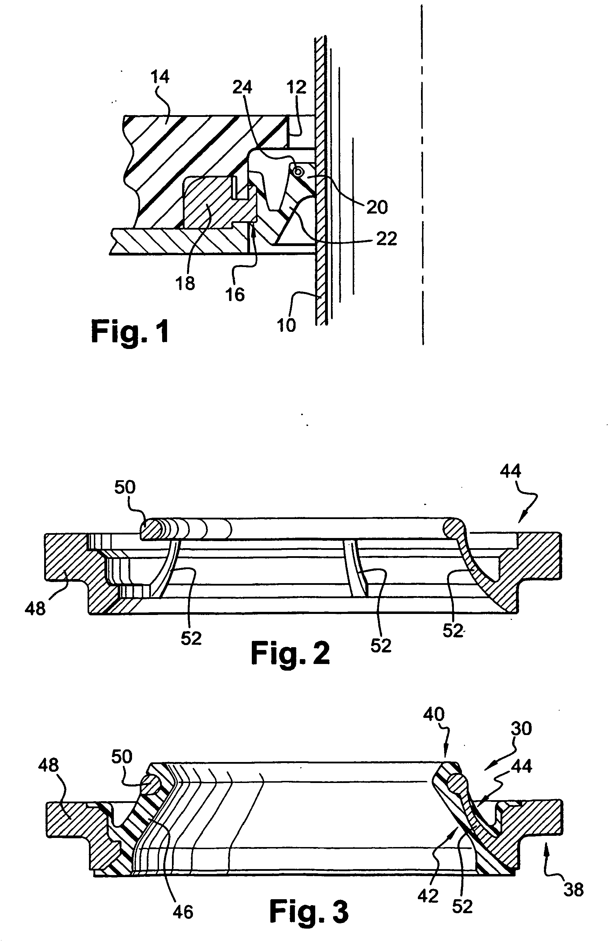

Sur la figure 1, on a représenté en 10 un puits de bougie ainsi qu'une ouverture 12 ménagée dans un couvre-culasse 14 permettant le passage dudit puits de bougie.

L'intérieur du couvre-culasse contenant un lubrifiant, un joint 16 est prévu pour assurer l'étanchéité entre l'ouverture 12 du couvre-culasse et le puits de bougie 10.

Ce joint 16 comprend un corps 18 sous forme d'anneau, susceptible d'être maintenu au niveau de l'ouverture 12, une lèvre 20 susceptible d'entourer le puits de bougie ainsi qu'une zone 22 intermédiaire conique, reliant la lèvre 20 au corps 18. Généralement, le joint est réalisé en élastomère.

Selon un mode de réalisation, le corps 18 comprend un noyau ayant la fonction de raidisseur, réalisé par exemple en polyamide, afin d'assurer un bon maintien du joint au niveau de l'ouverture et d'obtenir des caractéristiques mécaniques satisfaisantes.

Pour assurer une pression suffisante en périphérie du puits de bougie, la lèvre 20 comprend un ressort 24 en spirale, noyé dans l'élastomère, susceptible d'entourer le puits de bougie. Grâce à son élasticité, le ressort 24 est sensé exercer un effort concentrique sur le conduit.

Selon une autre caractéristique des joints existants, afin d'assurer l'étanchéité malgré les défauts de coaxialité entre les axes de l'ouverture et du puits de bougie, la zone intermédiaire est souple permettant d'adapter la géométrie du joint à celle des pièces à étancher.

Les joints existants ne donnent pas satisfaction pour les raisons suivantes :
Lors de la réalisation du joint, l'élastomère a tendance à s'infiltrer entre les spires du ressort. Ainsi, le ressort est sensiblement figé dans l'élastomère et perd une grande partie de ses propriétés élastiques si bien que l'effort de pression concentrique du joint sur le puits de bougie est fortement réduit.
Enfin, le procédé de moulage du joint est relativement complexe et coûteux dans la mesure où deux éléments indépendants, le ressort et le raidisseur, doivent être positionnés à l'intérieur du moule.
Aussi, la présente invention vise à pallier les inconvénients de l'art antérieur en proposant un nouveau joint de conception simple dont la structure permet d'assurer une bonne étanchéité differents joints pour puits de bougie sont divulgués dans les documents FR 2 476 538, JP 08 121 247 ou US 2002 130 472.
A cet effet, l'invention a pour objet un joint susceptible d'assurer l'étanchéité entre deux surfaces concentriques, notamment entre un cylindre et une ouverture permettant le passage dudit cylindre, ledit joint comportant d'une part un corps susceptible d'assurer la liaison entre le joint et l'ouverture, et d'autre part, une lèvre susceptible d'entourer le cylindre à étancher, une paroi mince assurant la liaison entre ledit corps et ladite lèvre et formant une barrière d'étanchéité, caractérisé en ce qu'il comprend un noyau d'un seul tenant, comportant une première partie formant raidisseur au niveau du corps du joint, une seconde partie sous forme d'anneau prévue au niveau de la lèvre ainsi que plusieurs pattes (52) assurant la liaison entre l'anneau (50) et le raidisseur (48), lesdites pattes ayant une section relativement faible afin de pouvoir se déformer de manière élastique et en ce que ledit noyau en un premier matériau est noyé ou partiellement revêtu par un second matériau, le premier matériau ayant une plus grande rigidité que le second.

D'autres caractéristiques et avantages ressortiront de la description qui va suivre de l'invention, description donnée à titre d'exemple uniquement, en regard des dessins annexés sur lesquels :
- la figure 1 est une coupe d'un joint pour puits de bougie selon l'art antérieur,
- la figure 2 est une coupe d'un noyau d'un joint selon l'invention,
- la figure 3 est une coupe d'un joint selon l'invention,
- la figure 4 est une vue en perspective illustrant un joint de puits de bougie,
- la figure 5 est une coupe d'un joint selon l'invention en place, et
- la figure 6 est une vue en perspective d'une variante d'une partie du noyau du joint selon l'invention.

Sur les figures 2 à 5, on a représenté en 30 un joint susceptible d'assurer l'étanchéité entre un puits de bougie 32 et une ouverture 34 ménagée dans un couvre-culasse 36 pour permettre le passage dudit puits.

Toutefois, même si l'invention est décrite appliquée à un puits de bougie, le joint selon l'invention peut être appliqué à d'autres domaines et assurer l'étanchéité entre un conduit et une ouverture permettant le passage dudit conduit.

Le joint comprend deux parties sensiblement concentriques, un corps 38 sous forme d'anneau susceptible d'assurer la liaison entre le joint et la paroi au niveau de laquelle est ménagée l'ouverture 34 et d'autre part une lèvre 40 susceptible d'entourer le conduit 32, une paroi mince 42 sensiblement conique, appelée par la suite membrane, assurant la liaison entre le corps 38 et la lèvre 40 et constituant une barrière d'étanchéité.

Selon l'invention, le joint comprend un noyau 44 en un premier matériau, illustré en détails sur la figure 2, noyé ou partiellement revêtu par un revêtement 46 en un second matériau, par exemple en élastomère, le premier matériau, par exemple une matière plastique, notamment un polyamide, ayant une plus grande rigidité que le second.

Selon l'invention, le noyau 44 comprend une première partie 48 formant raidisseur au niveau du corps 38 du joint, une seconde partie 50 sous forme d'anneau prévue au niveau de la lèvre 40, ainsi qu'au moins un élément de liaison 52 reliant la première partie 48 et la seconde partie 50.

L'anneau 50 est susceptible d'entourer le conduit et permet d'exercer un effort concentrique sur le conduit afin d'obtenir une bonne étanchéité.

Contrairement à l'art antérieur, les propriétés élastiques de l'anneau 50 ne sont pas altérées lors du moulage de l'élastomère car ce dernier ne pénètre pas à l'intérieur dudit anneau comme il pouvait le faire dans le cas d'un ressort.

De plus, contrairement à l'art antérieur, le raidisseur 48, l'anneau 50 et le ou les éléments de liaison 52 sont réalisés d'un seul tenant ce qui simplifie la réalisation du joint, un seul élément devant être positionné dans le moule avant l'injection de l'élastomère. La simplification du procédé permet notamment de réduire les coûts et de limiter les rebus.

Malgré la faible section de l'anneau, ce dernier étant relié au raidisseur, son positionnement à l'intérieur du moule est simplifié. Ainsi, d'un joint à l'autre, l'anneau est toujours parfaitement placé et conserve son efficacité.

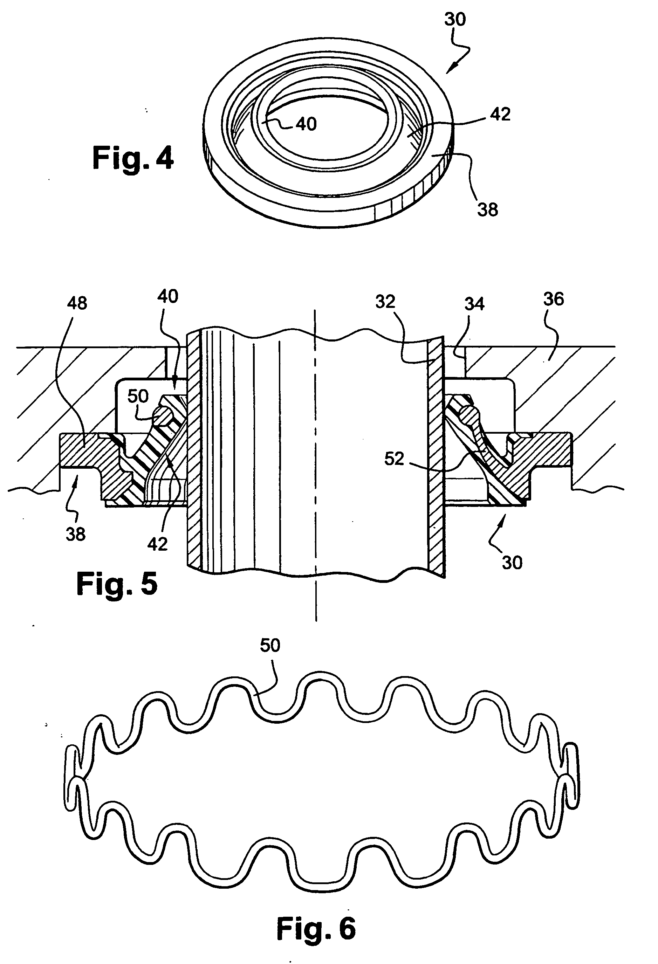

Selon une autre caractéristique de l'invention, le noyau comprend plusieurs pattes 52 assurant la liaison entre l'anneau 50 et le raidisseur 48. Les pattes 52 ont une section relativement faible afin de pouvoir se déformer de manière élastique et adapter la géométrie du joint à celle des pièces à étancher, et de compenser notamment les défauts de coaxialité entre l'ouverture 34 et le conduit 32, comme illustré sur la figure 5.

A titre d'exemple, l'anneau 50 a une section de l'ordre de 2 mm de diamètre et les pattes ont une épaisseur de l'ordre de 1 mm.

Comme illustré sur la figure 3, les pattes 52 sont noyées dans le second matériau en élastomère au niveau de la membrane 42. En complément, le second matériau recouvre partiellement l'anneau 50, à l'exception de la surface orientée vers l'extérieur afin de former la lèvre 40. Enfin, le second matériau recouvre partiellement le raidisseur 38, notamment la surface du raidisseur 38 susceptible d'être en regard du conduit 32 avec un prolongement au niveau de la surface supérieure et de la surface inférieure.

Selon un avantage procuré par le joint de l'invention, l'anneau étant réalisé en un matériau plus rigide que l'élastomère, il est difficilement extensible ce qui permet de comprimer l'élastomère contre la surface du conduit 32. Néanmoins, l'anneau 50 réalisé en un matériau plastique peut se déformer légèrement de manière à s'adapter à des conduits 32 non cylindriques ou ayant des défauts de cylindricité.

Selon une variante de l'invention, pour accroître ses propriétés élastiques et augmenter ses capacités d'allongement, l'anneau 50 peut décrire une sinusoïde en hauteur, comme illustré sur la figure 6. Cette configuration permet d'améliorer l'adaptabilité du joint aux formes du conduit 32 et d'obtenir une bonne étanchéité même si ledit conduit 32 a une section non circulaire.

A titre d'exemple, on utilise pour le noyau un matériau, par exemple une matière plastique, ayant un module élastique de 3000 à 9000 MPa, et pour les éléments assurant l'étanchéité un matériau, par exemple un élastomère, ayant un module élastique de 2 à 5MPa.

Bien entendu, l'invention n'est évidemment pas limitée au mode de réalisation représenté et décrit ci-dessus, mais en couvre au contraire toutes les variantes, notamment en ce qui concerne les formes et les dimensions du joint ainsi que les matériaux utilisés pour les parties constitutives dudit joint.

Enfin, le joint selon l'invention peut être utilisé dans d'autres applications pour lesquelles il est nécessaire d'assurer une étanchéité entre deux surfaces concentriques, notamment entre une ouverture et un cylindre creux (conduit) ou plein (axe).

## Revendications

1. Joint susceptible d'assurer l'étanchéité entre deux surfaces concentriques, notamment entre un cylindre (32) et une ouverture (34) permettant le passage dudit cylindre, ledit joint comportant d'une part un corps (38) susceptible d'assurer la liaison entre le joint et l'ouverture, et d'autre part, une lèvre (40) susceptible d'entourer le cylindre (32) à étancher, une paroi mince (42) assurant la liaison entre ledit corps (38) et ladite lèvre (40) et formant une barrière d'étanchéité, **caractérisé en ce qu'**il comprend un noyau (44) d'un seul tenant, comportant une première partie (48) formant raidisseur au niveau du corps (38) du joint, une seconde partie (50) sous forme d'anneau prévue au niveau de la lèvre (40), ainsi que plusieurs pattes (52) assurant la liaison entre l'anneau (50) et le raidisseur (48), lesdites pattes ayant une section relativement faible afin de pouvoir se déformer de manière élastique et **en ce que** ledit noyau (44) en un premier matériau est noyé ou partiellement revêtu par un second matériau (46), le premier matériau ayant une plus grande rigidité que le second.

2. Joint selon la revendication 1, **caractérisé en ce que** le second matériau est un élastomère et **en ce que** le premier matériau est une matière plastique, notamment un polyamide.

3. Joint selon la revendication 1 ou 2, **caractérisé en ce que** le ou les élément(s) de liaison (52) sont noyés dans le second matériau formant la paroi mince (42), ledit second matériau recouvrant au moins partiellement l'anneau (50) afin de former la lèvre (40).

4. Joint selon l'une quelconque des revendications précédentes, **caractérisé en ce que** l'anneau (50) a une section de l'ordre de 2 mm.

5. Joint selon l'une quelconque des revendications précédentes, **caractérisé en ce que** l'anneau (50) décrit une sinusoïde en hauteur pour accroître ses propriétés élastiques et augmenter ses capacités d'allongement.

## Claims

1. Seal for providing sealing between two concentric surfaces, in particular between a cylinder (32) and an opening (34) enabling said cylinder to pass through, said seal comprising a body (38) for linking the seal and the opening, and also a lip (40) surrounding the cylinder (32) to be sealed, a narrow wall (42) linking said body (38) and said lip (40) and forming a sealing barrier, **characterized in that** said seal has a one-piece core (44) comprising a first part (48) forming a stiffener at the body (38) of the seal, a second part (50) in the form of a ring provided at the lip (40), and also a plurality of tabs (52) linking the ring (50) and the stiffener (48), said tabs having a relatively thin cross section in order that they can deform elastically, and **in that** said core (44) made of a first material is embedded or partially coated with a second material (46), the first material being stiffer than the second.

2. Seal according to Claim 1, **characterized in that** the second material is an elastomer and **in that** the first material is a plastic, in particular a polyamide.

3. Seal according to Claim 1 or 2, **characterized in that** the linking element or elements (52) is or are embedded in the second material forming the narrow wall (42), said second material at least partially covering the ring (50) in order to form the lip (40).

4. Seal according to any one of the preceding claims, **characterized in that** the ring (50) has a cross section of around 2 mm.

5. Seal according to any one of the preceding claims, **characterized in that** the ring (50) describes an upright sinusoid in order to increase its elastic properties and its extendability.

## Patentansprüche

1. Dichtung zur Gewährleistung einer Abdichtung zwischen zwei konzentrischen Flächen, insbesondere zwischen einem Zylinder (32) und einer Öffnung (34), die ein Hindurchführen des Zylinders gestattet, wobei die Dichtung einerseits einen Körper (38) zur Gewährleistung der Verbindung zwischen der Dichtung und der Öffnung und andererseits eine Lippe (40) zum Umgeben des abzudichtenden Zylinders (32) aufweist, wobei eine dünne Wand (42) die Verbindung zwischen dem Körper (38) und der Lippe (40) gewährleistet und eine Dichtungssperre bildet, **dadurch gekennzeichnet, dass** sie einen einstückigen Kern (44) umfasst, der einen ersten Teil (48), der eine Versteifung am Körper (38) der Dichtung bildet, einen zweiten Teil (50) in Form eines an der Lippe (40) vorgesehenen Rings sowie mehrere Ansätze (52), die die Verbindung zwischen dem Ring (50) und der Versteifung (48) bilden, aufweist, wobei die Ansätze einen relativ dünnen Querschnitt aufweisen, um sich elastisch verformen zu können, und dass der aus einem ersten Material hergestellte Kern (44) in einem zweiten Material (46) eingebettet oder teilweise davon bedeckt ist, wobei das erste Material eine größere Steifigkeit als das zweite aufweist. ,

2. Dichtung nach Anspruch 1, **dadurch gekennzeichnet, dass** das zweite Material ein Elastomer ist und dass das erste Material ein Kunststoffmaterial, insbesondere Polyamid, ist.

3. Dichtung nach Anspruch 1 oder 2, **dadurch gekennzeichnet, dass** das Verbindungselement oder die Verbindungselemente (52) in dem die dünne Wand (42) bildenden zweiten Material eingebettet sind, wobei das zweite Material den Ring (50) zumindest teilweise bedeckt, um die Lippe (40) zu bilden.

4. Dichtung nach einem der vorhergehenden Ansprüche, **dadurch gekennzeichnet, dass** der Ring (50) einen Querschnitt von ca. 2 mm aufweist.

5. Dichtung nach einem der vorhergehenden Ansprüche, **dadurch gekennzeichnet, dass** der Ring (50) eine aufrechte Sinuskurve beschreibt, um seine elastischen Eigenschaften und sein Dehnungsvermögen zu verstärken.
